# EUROPÄISCHE PATENTANMELDUNG

(11) **EP 1 428 431 A2**
(43) Veröffentlichungstag der Anmeldung: **16.06.2004**
(21) Anmeldenummer: 03025086.4
(22) Anmeldetag: 03.11.2003
(51) Int. Cl.: A01K 97/10

(54) **Angelruten-Haltesystem**

(30) Priorität: 11.12.2002 DE 10258085
(71) Anmelder: FLM GmbH Foto-, Licht- und Messtechnisches Zubehör, 79312 Emmendingen (DE)
(72) Erfinder: Bürklin, Werner, 79312 Emmendingen (DE)
(74) Vertreter: Maucher, Wolfgang, Dipl.-Ing.

(57) **Zusammenfassung**

Die Erfindung betrifft ein Angelruten-Haltesystem zur fangbereiten Halterung wenigstens einer Angelrute. Für das erfindungsgemäße Angelrute-Haltesystem ist kennzeichnend, dass das Angelruten-Haltesystem baukastenartig ausgestaltet ist und zumindest drei Erdspeere hat, die zu einem Standfuß lösbar miteinander verbindbar sind, welcher Standfuß wenigstens einen Rutenhalter trägt.

## Beschreibung

Die Erfindung betrifft ein Angelruten-Haltesystem zur fangbereiten Halterung wenigstens einer Angelrute.

Man kennt bereits verschiedene Angelruten-Haltesysteme. Solche Angelruten-Haltesysteme werden verwendet, um die beim Angeln eingesetzten Angelruten fangbereit zu halten, ohne dass der Angler diese Angelruten ständig in den Händen halten muss. Diese Angelruten-Haltesysteme sollen dem Angler das Angeln wesentlich erleichtern und darüber hinaus ihm eventuell auch den Einsatz mehrerer Angelruten gleichzeitig ermöglichen.

Vorbekannte Angelruten-Haltesysteme sind häufig nur sperrig zu transportieren, in schwierigem Ufergelände nicht ohne weiteres aufzustellen und erlauben oft nur eine definierte Ausrichtung der fangbereiten Angelrute.

Es besteht daher insbesondere die Aufgabe, ein Angelruten-Haltesystem zu schaffen, das vergleichsweise kostengünstig herzustellen, vielseitig einsetzbar und platzsparend zu verstauen ist.

Die erfindungsgemäße Lösung dieser Aufgabe besteht bei dem Angelruten-Haltesystem der eingangs erwähnten Art insbesondere darin, dass das Angelruten-Haltesystem baukastenartig ausgestaltet ist und zumindest drei Erdspeere hat, die zu einem Standfuß lösbar miteinander verbindbar sind, welcher Standfuß wenigstens einen Rutenhalter trägt.

Das erfindungsgemäße Angelruten-Haltesystem ist baukastenartig ausgestaltet und lässt sich durch Zerlegen in die einzelnen Bestandteile des Baukasten-Systems platzsparend verstauen. Durch Austausch einzelner Bestandteile und durch Ergänzung der bereits vorhandenen Bestandteile aus dem Baukasten-System lässt sich das erfindungsgemäße Angelruten-Haltesystem vom Anwender einfach und leicht an die in einem Ufergelände vorgefundenen Geländebedingungen und/oder an die benötigte Ausrichtung der Angelrute anpassen. Das erfindungsgemäße Angelruten-Haltesystem zeichnet sich daher durch seine vielseitige Einsetzbarkeit aus.

Zusätzliche Ausgestaltungen der Erfindung von zum Teil eigener schutzwürdiger Bedeutung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: einen Zwischenadapter (Multiring) eines baukastenartig ausgestalteten Angelruten-Haltesystems in einem Teil-Längsschnitt, wobei dieser Zwischenadapter mit mehreren Erdspeeren lösbar verbindbar ist, die einen Standfuß bilden, und wobei dieser Zwischenadapter mit einem hier nicht dargestellten Rutenhalter lösbar verbindbar ist,
- Fig. 2: den Zwischenadapter aus Figur 1 in einem Querschnitt durch die Schnittebenen I-I bzw. II-II in Figur 1,
- Fig. 3: einen teleskopartig verlängerbaren Erdspeer des Angelruten-Haltesystems,
- Fig. 4: ein Kugelgelenk, das beispielsweise einerseits mit dem Zwischenadapter aus Figur 1 und 2 und andererseits mit einem weiteren Erdspeer gemäß Figur 3 verbindbar ist,
- Fig. 5: den Zwischenadapter aus Figur 1 und 2 in einem Längsschnitt durch eine Aufnahmeöffnung, in die ein Erdspeer gemäß Figur 3 einsetzbar und festlegbar gehalten ist,
- Fig. 6: ein längsgeschnittenes Zwischenstück zur Befestigung eines nicht weiter dargestellten Rutenhalters,
- Fig. 7: einen bloß als kurzen Erdspieß ausgestalteten Erdspeer,
- Fig. 8: einen Trägerkopf (Highpod-Kopf) in einem Teil-Längsschnitt, an dem drei, einen Standfuß bildende Erdspeere gemäß Figur 3 lösbar befestigbar sind und der beispielsweise über ein Rutenhalter-Zwischenstück mit einem hier nicht dargestellten Rutenhalter verbunden werden kann,
- Fig. 9: den Trägerkopf aus Figur 8 in einer teilweise aufgeschnittenen Draufsicht,
- Fig. 10: ein Rutenhalter-Zwischenstück in einer teilgeschnittenen Draufsicht, wobei das Rutenhalter-Zwischenstück zum Verbinden des Trägerkopfs aus Figur 8 und 9 mit zumindest einem, hier nicht weiter dargestellten Rutenhalter vorgesehen ist und
- Fig. 11: einen Schnellwechseladapter zum Ausrichten eines Rutenhalters in Umfangsrichtung.

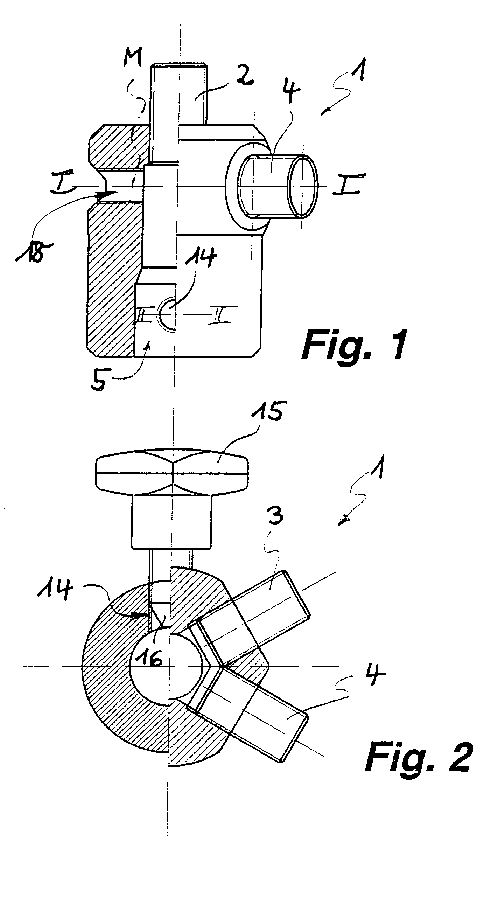

In den Figuren 1 bis 11 sind verschiedene Bestandteile eines Angelruten-Haltesystems dargestellt. Diese Bestandteile lassen sich baukastenartig miteinander kombinieren und zu einer Angelruten-Halterung verbinden, die an bestimmte Geländebedingungen im Ufergelände und/oder an eine bestimmte Ausrichtung der Angelrute angepasst ist.

Das baukastenartig ausgestaltete Angelruten-Haltesystem weist einen Zwischenadapter 1 auf, der u.a. in den Figuren 1 und 2 näher dargestellt ist. Wie aus den Figuren 1 und 2 deutlich wird, trägt der im wesentlichen ring- oder zylinderförmige Zwischenadapter 1 drei Gewinde-Anschlusszapfen 2, 3, 4, von denen zwei Gewinde-Anschlusszapfen 3, 4 um etwa 45° versetzt am Zwischenadapter-Umfang und ein weiterer Gewinde-Anschlusszapfen 2 an einer der beiden Zwischenadapter-Stirnseiten vorgesehen sind. An der den Gewinde-Anschlusszapfen 2 abgewandten Zwischenadapter-Stirnseite ist eine Aufnahmeöffnung 5 vorgesehen.

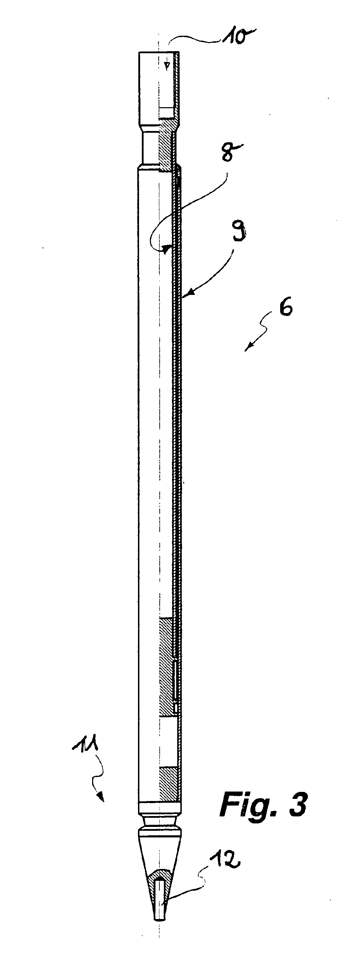

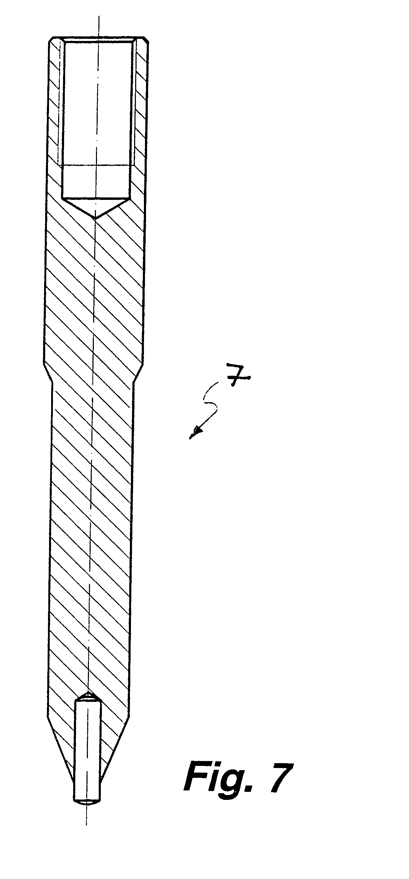

Zum baukastenartig ausgestalteten Angelruten-Haltesystem gehören auch Erdspeere 6, 7, wie sie in den Figuren 3 und 7 dargestellt sind.

Dabei ist der in Figur 3 dargestellte Erdspeer 6 aus zwei Rohren 8, 9 hergestellt, die teleskopartig ineinander verschoben und in der gewählten Relativposition, die der benötigten Gesamtlänge des Erdspeeres 6 entspricht, festgelegt werden können. Demgegenüber weist der in Figur 7 abgebildete und hier als kurzer Erdspieß ausgestalteter Erdspeer 7 eine definierte Länge auf.

Die Erdspeere 6, 7 haben an ihrem einen Stirnende eine Gewindeöffnung 10, mit der sich diese Erdspeere 6, 7 beispielsweise an einen der Gewindezapfen 2, 3, 4 des Zwischenadapters 1 festschrauben lassen. Das der Gewindeöffnung 10 abgewandte Stirnende der Erdspeere 6, 7 ist demgegenüber als spitz zulaufende Erdspitze 11 ausgestaltet, die aus massivem Material hergestellt ist und deren vorstehendes Spitzenende durch einen stählernen Dorn 12 gebildet wird.

Um den für eine Angelruten-Halterung erforderlichen Standfuß zu bilden, können beispielsweise zwei Zwischenadapter 1 auf Abstand miteinander verbunden werden. Diese Verbindung kann ebenfalls mit Hilfe eines Erdspeeres 6 erfolgen, dessen Gewindeöffnung 10 am Anschlusszapfen 2 des einen Zwischenadapters 1 angeschraubt wird und der mit seiner Erdspitze 11 in die Aufnahmeöffnung 5 des anderen Zwischenadapters 1 einschiebbar ist. Um die Erdspitze 11 dieses Erdspeeres 6 in der Aufnahmeöffnung 5 des Zwischenadapters 1 zu sichern, ist am Zwischenadapter-Umfang des Zwischenadapters 1 zumindest eine Gewindeöffnung 14 für eine Sicherungsschraube 15 vorgesehen, die mit ihrer Schraubenspitze 16 in die Aufnahmeöffnung 5 vorsteht.

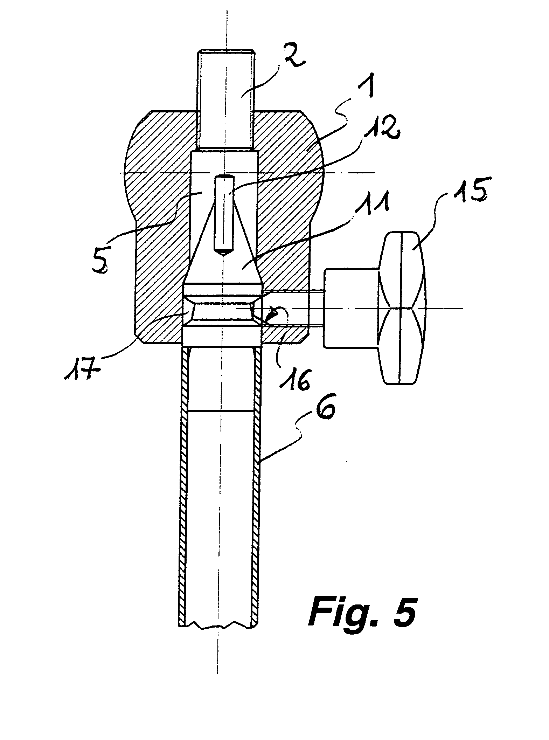

Aus Figur 5 wird deutlich, dass die sich kegelförmig verjüngende Schraubenspitze 16 der Sicherungsschraube 15 in Gebrauchsstellung in eine Umfangsnut 17 an der Erdspitze 11 des Erdspeeres 6 vorsteht, und dass diese Umfangsnut 17 sich zu ihrer Nutöffnung hin kegel- oder trichterförmig erweitert. Die aneinander anliegenden Schrägflächen der Umfangsnut 17 einerseits und der kegelförmigen Schraubenspitze 16 andererseits wirken somit derart zusammen, dass beim Einschrauben und Festziehen der Sicherungsschraube 15 der Erdspeer 6 mit seiner Erdspitze 11 zunehmend in die Aufnahmeöffnung 5 gedrückt und dort sicher und fest gehalten wird. Dabei liegt die sich kegelförmig verjüngende Erdspitze 11 an einem komplementär geformten Wandungsabschnitt der inneren Umfangswandung der Aufnahmeöffnung 16 an.

Werden nun an die Anschlusszapfen 3, 4 der beiden, über einen Erdspeer 6 verbundenen Zwischenadapter 1 Erdspeere 6 oder Erdspeere 7 angeschraubt, ist ein stabiler Standfuß zusammengestellt, der einen Rutenhalter für zumindest eine Angelrute tragen kann.

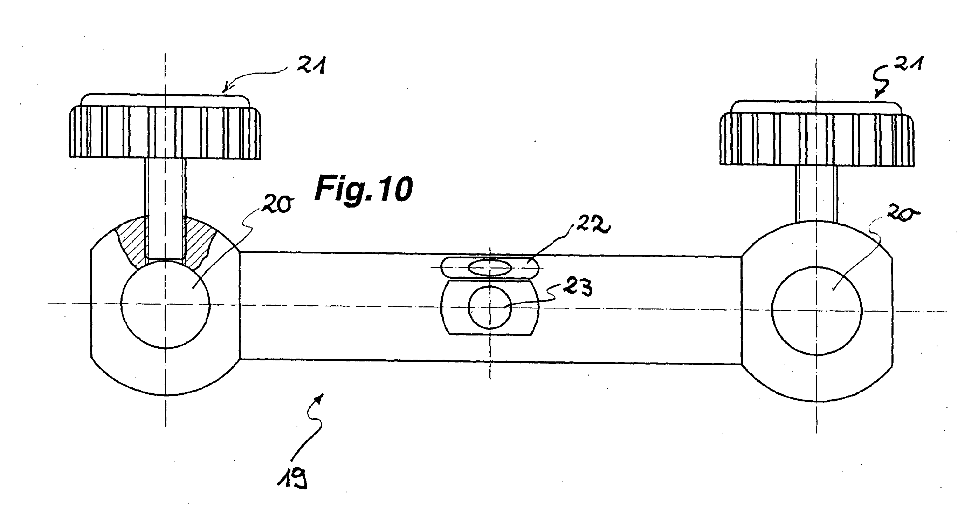

Aus Figur 1 wird deutlich, dass am Zwischenadapter-Umfang des Zwischenadapters 1 auf der den Anschlusszapfen 3, 4 abgewandten Umfangsseite etwa auf der zwischen den Anschlusszapfen 3, 4 gebildeten Mittellinie M eine Gewindeöffnung 18 vorgesehen ist, die als Anschluss zur Befestigung beispielsweise eines Rutenhalters dient. Ein solcher, hier nicht weiter abgebildeter Rutenhalter kann beispielsweise über ein, in Figur 10 noch näher abgebildetes Rutenhalter-Zwischenstück 19 an den Zwischenadaptern 1 lösbar befestigt werden. Das in Figur 10 abgebildete Rutenhalter-Zwischenstück ist im wesentlichen stabförmig ausgebildet und weist an seinen gegenüberliegenden Stabenden Aufnahmeöffnungen 20 zur Befestigung des Rutenhalters auf. Dabei sind zur Sicherung des Rutenhalters Sicherungsschrauben 21 vorgesehen, die über eine Gewindeöffnung in der die Aufnahmeöffnung 20 begrenzenden Umfangswandung in die Aufnahmeöffnung 20 vorstehen. In Figur 10 wird deutlich, dass das Rutenhalter-Zwischenstück 19 etwa mittig zwei Angriffstellen 22, 23 aufweist, von denen eine Angriffstelle 22 eine vertikal orientierte Ausrichtung der zumindest einen Angelrute erlaubt und von denen die andere Angriffstelle 23 für eine horizontal orientierte Ausrichtung der zumindest einen Angelrute vorgesehen ist. Diese Angriffstellen 22, 23 sind hier als sich schneidende Durchstecköffnungen 22, 23 ausgebildet, durch die eine Verbindungsschraube bis zur Gewindeöffnung 18 des Zwischenadapters 1 durchgeschoben werden kann.

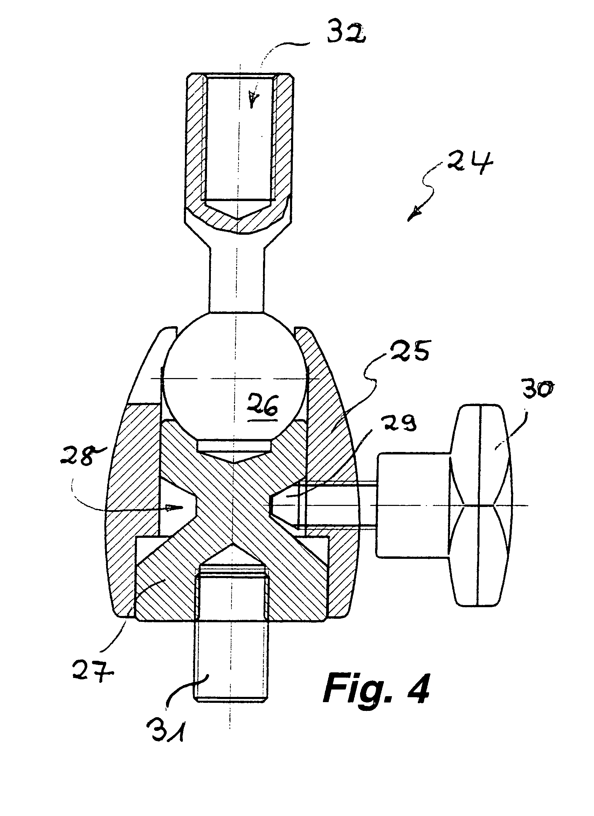

Um eine möglichst platzsparende Angelruten-Halterung zu schaffen, ist es auch möglich, den Zwischenadapter 1 mit drei Erdspeeren 7 zu kombinieren, wobei zwei dieser Erdspeere 7 an den Anschlusszapfen 3, 4 angeschraubt sind, während ein weiterer Erdspeer 7 über ein in Figur 4 näher dargestelltes Kugelgelenk 24 am Anschlusszapfen 2 des Zwischenadapters 1 angreift. Mit Hilfe des Kugelgelenks 24 lässt sich der aus dem Zwischenadapter 1 und drei Erdspeeren 7 gebildete Standfuß so ausrichten, dass diese vergleichsweise kleine und platzsparende Angelruten-Halterung sich dennoch gut an die vorgefundene Geländeformation anpassen lässt.

Das in Figur 4 dargestellte Kugelgelenk 24 weist eine Kugelaufnahme 25 mit einer Innenhöhlung zur Aufnahme der Gelenkkugel 26 auf, in der ein Schiebestück 27 axial verschieblich geführt ist. Das Schiebestück 27 weist eine Umfangsnut 28 auf, die sich zur Nutöffnung hin vorzugsweise kegel- oder trichterförmig erweitert. In diese Umfangsnut 28 greift die Schraubenspitze 29 einer Sicherungsschraube 30 ein, die zum Festlegen der Gelenkkugel in der gewünschten Gelenkstellung dient. Dazu verjüngt sich die Schraubenspitze 29 der Sicherungsschraube 30 zu ihrem freien Ende hin etwa kegelförmig. Die einander anliegenden Schrägflächen der Schraubenspitze 29 und der Umfangsnut 28 wirken somit derart zusammen, dass durch Einschrauben und Festziehen der Sicherungsschraube 30 das Schiebestück 27 in der Innenhöhlung der Kugelaufnahme 25 derart verschoben wird, bis die Gelenkkugel 26 in der Kugelaufnahme 25 unverrückbar gehalten ist.

Während am Schiebestück 27 ein Gewindezapfen 31 vorgesehen ist, steht an der Gelenkkugel 26 ein Haltesteg mit einer Gewindeöffnung 32 vor. Das Kugelgelenk 24 kann somit mit der Gewindeöffnung 32 am Gewindezapfen 2 des Zwischenadapters 1 festgeschraubt werden, während an den Gewindezapfen 31 des Kugelgelenks 24 die Gewindeöffnung 10 eines Erdspeeres 6 oder 7 angeschraubt ist.

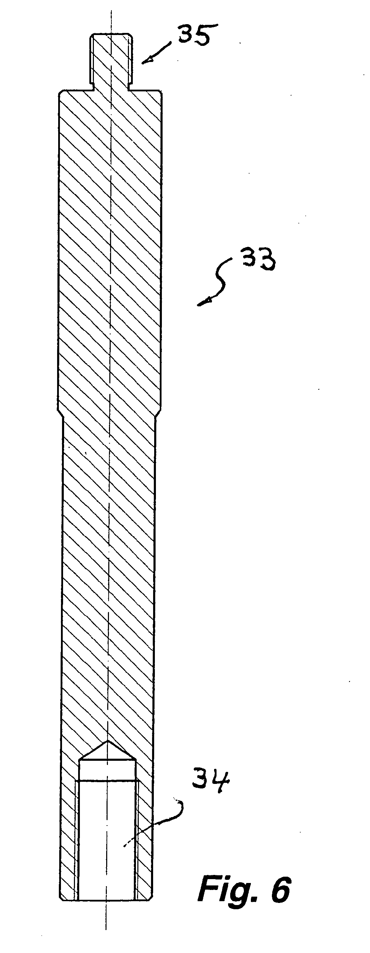

Eine platzsparend aus dem Zwischenadapter 1 sowie drei Erdspeeren 7 gebildete Angelruten-Halterung kann mit dem hier nicht weiter abgebildeten Rutenhalter auch über ein in Figur 6 dargestelltes Zwischenstück 33 befestigt werden. Das in Figur 6 gezeigte Zwischenstück 33 ist stabförmig ausgebildet und weist an seinem einen Stabende eine Gewindeöffnung 34 auf, während an dem gegenüberliegenden Stabende ein Gewindezapfen 35 vorgesehen ist. Das Zwischenstück 33 aus Figur 6 lässt sich mit seinem Gewindezapfen 35 in die Gewindeöffnung 18 des Zwischenadapters 1 einschrauben, so dass die Gewindeöffnung 34 des Zwischenstücks 33 für den nicht weiter abgebildeten Rutenhalter zur Verfügung steht.

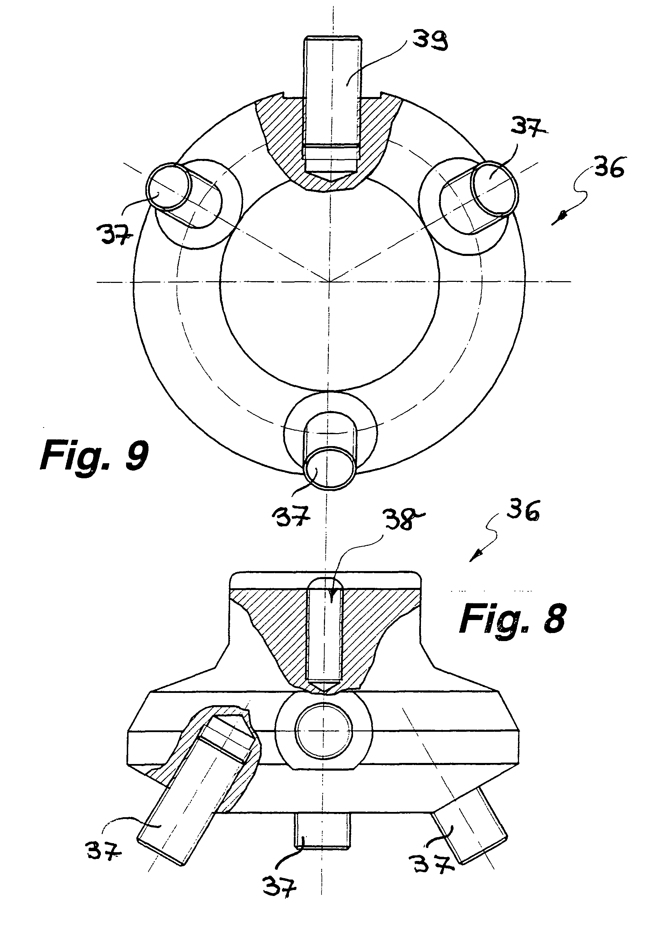

Um eine besonders stabile und standsichere Angelruten-Halterung zu schaffen, die auch mehrere fangbereite Angelruten tragen kann, ist dem Angelruten-Haltesystem auch ein in den Figuren 8 und 9 näher dargestellter Trägerkopf 36 zugeordnet. Der in den Figuren 8 und 9 näher dargestellte Trägerkopf 36 ist mit drei, einen Standfuß bildenden Erdspeeren 6, 7 lösbar verbindbar.

Dazu weist der Trägerkopf 36 drei Gewindezapfen 37 auf, an denen die Erdspeere 6, 7 mit ihren Gewindeöffnungen 10 angeschraubt werden können. Auf der den Gewindezapfen 37 abgewandten Stirnende des Trägerkopfs 36 ist eine zentrale Gewindeöffnung 38 vorgesehen, an das ebenfalls das Rutenhalter-Zwischenstück 19 in der oben beschriebenen Weise angeschraubt werden kann. Darüber hinaus ist am Umfang des Trägerkopfs 36 ein Gewindezapfen 39 vorgesehen, der mit weiteren Bestandteilen des Angelruten-Haltesystems lösbar verbindbar ist.

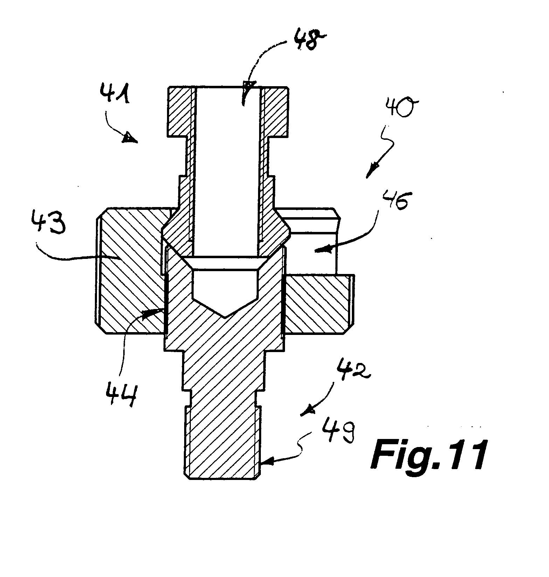

Um einen beispielsweise auch als Bissanzeiger ausgestalteten Rutenhalter in der benötigten Drehstellung an einem Standfuß des hier dargestellten Angelruten-Haltesystems befestigen zu können, ist ein in Figur 11 gezeigter Schnellwechseladapter 40 vorgesehen. Der Schnellwechseladapter 40 weist zwei koaxial zueinander angeordnete Anschlussstücke 41, 42 auf, von denen ein Anschlussstück 41 drehbar in einem Adapter-Mittelstück 43 gehalten ist. Das Anschlussstück 41 ist in jeder beliebigen Drehstellung mittels des anderen Anschlussstückes 42 festlegbar; dazu ist das andere Anschlussstück 42 zum Festlegen der beiden Anschlussstücke 41, 42 in einer Gewindeöffnung 44 des Adapter-Mittelstücks 43 axial verstellbar verschraubt. Durch Einschrauben des Anschlussstückes 42 in das Adapter-Mittelstück 43 werden die Anschlussstücke 41, 42 derart gegeneinander verspannt, dass das im Adapter-Mittelstück 43 drehbar gehaltene Anschlussstück 41 in der gewählten Drehstellung unverrückbar gehalten wird. Aus Figur 11 ist erkennbar, dass das Anschlussstück 41 im Adapter-Mittelstück 43 in einer randseitig offenen Haltenut 46 drehbar und gleichzeitig verschieblich geführt ist. Um die beiden koaxial zueinander angeordneten Anschlussstücke 41, 42 lagegerecht am Adapter-Mittelstück 43 zu sichern, weist die Stirnseite des einen Anschlussstückes 42 eine konische Einformung auf, in die das andere Anschlussstück 41 mit einer komplementär geformten konischen Ausformung zentrierend eingreift.

Um den Schnellwechseladapter 40 einerseits mit dem hier beschriebenen Angelruten-Haltesystem und andererseits mit einem eventuell auch handelsüblichen Rutenhalter verbinden zu können, sind an den dem Adapter-Mittelstück 43 abgewandten Endbereichen der Anschlussstücke 41, 42 entsprechende Anschlüsse vorgesehen. Dabei weist das Anschlussstück 41 eine stirnseitige Gewindeöffnung 48 zum Anschluss an einem Anschlusszapfen auf, während das andere Anschlussstück 42 ein Außengewinde 49 trägt.

## Patentansprüche

1. Angelruten-Haltesystem zur fangbereiten Halterung wenigstens einer Angelrute, wobei das Angelruten-Haltesystem baukastenartig ausgestaltet ist und zumindest drei Erdspeere (6, 7) hat, die zu einem Standfuß lösbar miteinander verbindbar sind, welcher Standfuß wenigstens einen Rutenhalter trägt.

2. Angelruten-Haltesystem nach Anspruch 1, **dadurch gekennzeichnet, dass** zumindest zwei Erdspeere (6, 7) an einem Zwischenadapter (1) angreifen, der seinerseits mit zumindest einem dritten Erdspeer (6, 7) verbunden ist.

3. Angelruten-Haltesystem nach Anspruch 1 oder 2, **dadurch gekennzeichnet, dass** zwischen dem Zwischenadapter (1) und zumindest einem dritten Erdspeer (6, 7) ein Gelenk vorgesehen ist.

4. Angelruten-Haltesystem nach einem der Ansprüche 1 bis 3, **dadurch gekennzeichnet, dass** das Gelenk als Kugelgelenk (24) ausgestaltet ist.

5. Angelruten-Haltesystem nach einem der Ansprüche 1 bis 4, **dadurch gekennzeichnet, dass** das Kugelgelenk (24) in der gewählten Gelenkstellung festlegbar ist.

6. Angelruten-Haltesystem nach einem der Ansprüche 1 bis 5, **dadurch gekennzeichnet, dass** der mit zwei Erdspeeren (6, 7) verbundene Zwischenadapter (1) auf Abstand mit einem weiteren Zwischenadapter (1) verbunden ist, an dem ebenfalls zwei Erdspeere (6, 7) angreifen.

7. Angelruten-Haltesystem nach einem der Ansprüche 1 bis 6, **dadurch gekennzeichnet, dass** die Zwischenadapter (1) über einen Erdspeer (6, 7) miteinander verbunden sind.

8. Angelruten-Haltesystem nach einem der Ansprüche 1 bis 7, **dadurch gekennzeichnet, dass** der Zwischenadapter (1) drei Gewinde-Anschlusszapfen (2, 3, 4) trägt, von denen zwei Gewinde-Anschlusszapfen (3, 4) um etwa 45° versetzt am Zwischenhalter-Umfang und ein weiterer Gewinde-Anschlusszapfen (2) an einer der beiden Zwischenadapter-Stirnseiten vorgesehen sind.

9. Angelruten-Haltesystem nach einem der Ansprüche 1 bis 8, **dadurch gekennzeichnet, dass** der Zwischenadapter (1) an der dem Gewinde-Anschlusszapfen (2) abgewandten Zwischenadapter-Stirnseite eine Aufnahmeöffnung (5) zur Aufnahme des Endbereiches eines Erdspeeres (6, 7) hat.

10. Angelruten-Haltesystem nach einem der Ansprüche 1 bis 9, **dadurch gekennzeichnet, dass** am Zwischenadapter-Umfang zumindest eine Gewindeöffnung (14) für eine Sicherungsschraube (15) vorgesehen ist und dass diese Sicherungsschraube (15) mit ihrer Schraubenspitze (16) in die Aufnahmeöffnung (5) vorsteht.

11. Angelruten-Haltesystem nach einem der Ansprüche 1 bis 10, **dadurch gekennzeichnet, dass** am Zwischenadapter-Umfang auf der den Anschlusszapfen (3, 4) abgewandten Umfangsseite vorzugsweise auf der zwischen den Anschlusszapfen vorgesehenen Mittellinie (M) eine Gewindeöffnung (18) oder dergleichen Anschluss zur Befestigung beispielsweise eines Rutenhalters angeordnet ist.

12. Angelruten-Haltesystem nach einem der Ansprüche 1 bis 11, **dadurch gekennzeichnet, dass** die Schraubenspitze (16) der Sicherungsschraube (15) sich kegelförmig verjüngt und in Gebrauchsstellung mit einer, an einem Endbereich des Erdspeeres (6, 7) vorgesehenen Umfangsnut (17) zusammenwirkt, die sich zur Nutöffnung hin vorzugsweise kegel- oder trichterförmig erweitert.

13. Angelruten-Haltesystem nach einem der Ansprüche 1 bis 12, **dadurch gekennzeichnet, dass** der Erdspeer (6, 7) an seinem einen Speerende eine stirnseitige Gewindeöffnung (10) und an seinem gegenüberliegenden Speerende eine Erdspitze (11) trägt und dass am Umfang der vorzugsweise massiv ausgestaltete Erdspitze (11) die Umfangsnut (17) vorgesehen ist.

14. Angelruten-Haltesystem nach einem der Ansprüche 1 bis 13, **dadurch gekennzeichnet, dass** zumindest ein Erdspeer (6) längenveränderbar ausgestaltet ist und dazu wenigstens zwei Speer-Rohre (8, 9) hat, die teleskopartig ineinander verschiebbar und in beliebigen Schiebestellungen lösbar arretierbar sind.

15. Angelruten-Haltesystem nach einem der Ansprüche 1 bis 14, **dadurch gekennzeichnet, dass** der Rutenhalter über einen Schnellwechseladapter (40) mit dem Standfuß verbunden ist, welcher Schnellwechseladapter zwei vorzugsweise koaxial zueinander angeordnete Anschlussstücke (41, 42) trägt, von denen ein Anschlussstück (41) drehbar in einem Adapter-Mittelstück (43) gehalten und in jeder beliebigen Drehstellung mittels des anderen Anschlussstückes (42) festlegbar ist, welches andere Anschlussstück (42) zum Festlegen der beiden Anschlussstücke (41, 42) in einer Gewindeöffnung (44) des Adapter-Mittelstücks (43) axial verstellbar verschraubbar ist.

16. Angelruten-Haltesystem nach einem der Ansprüche 1 bis 15, **dadurch gekennzeichnet, dass** von den einander beaufschlagenden Stirnseite der Anschlussstücke (41, 42) die Stirnseite des einen Anschlussstückes (42) eine konische Einformung und die Stirnseite des anderen Anschlussstückes (41) eine zentrierende konische Ausformung trägt.

17. Angelruten-Haltesystem nach einem der Ansprüche 1 bis 16, **dadurch gekennzeichnet, dass** an dem den Adapter-Mittelstück (43) abgewandten Endbereichen der Anschlussstücke (41, 42) das eine Anschlussstück eine stirnseitige Gewindeöffnung (48) zum Anschluss an einen Anschlusszapfen und das andere Anschlussstück ein Außengewinde (49) trägt.

18. Angelruten-Haltesystem nach einem der Ansprüche 1 bis 17, **dadurch gekennzeichnet, dass** zumindest drei, einen Standfuß bildende Erdspeere (6, 7) an einem gemeinsamen Trägerkopf (36) angreifen, der mit einem Rutenhalter verbindbar oder verbunden ist.

19. Angelruten-Haltesystem nach einem der Ansprüche 1 bis 18, **dadurch gekennzeichnet, dass** der Rutenhalter über ein Rutenhalter-Zwischenstück (19) mit dem Trägerkopf (36) verbunden ist und dass das Rutenhalter-Zwischenstück (19) zwei Angriffsstellen (22, 23) zum Verbinden mit dem Trägerkopf (36) aufweist, von denen eine Angriffstelle (22) eine vertikal orientierte Ausrichtung der zumindest einen Angelrute erlaubt und von denen die andere Angriffstelle (23) für eine horizontal orientierte Ausrichtung der zumindest einen Angelrute vorgesehen ist.
